# EUROPEAN PATENT APPLICATION

(11) **EP 1 187 468 A1**
(43) Date of publication of application: **13.03.2002**
(21) Application number: 01120970.7
(22) Date of filing: 31.08.2001
(51) Int. Cl.: H04N 5/445

(54) **Television system**

(30) Priority: 02.09.2000 GB 0021547
(71) Applicant: Pace Micro Technology PLC, Saltaire, Shipley, BD18 3LF (GB)
(72) Inventor: Moir, Mark, Cambridge, Cambridgeshire CB5 9QF (GB)
(74) Representative: Wood, Graham

(57) **Abstract**

The invention relates to a television system incorporating a display screen (2), broadcast data receiver (3), remote control device (6) and the generation of an EPG on screen which provides information relating to programmes and channels which can be viewed. In accordance with the invention the user can select one or a number of said channels and/or programmes from said EPG and designate a button or button configuration on the remote control (6) for each selected channel/programme or a number of selected channels/programmes. The selected channel(s)/programme(s) typically relate to pre-defined criteria, such as subject matter categories, user-favourite channels or similar. Once designated the user can then subsequently select a channel/programme for display by depression of the appropriate button or button configuration.

## Description

This invention relates to a television system having means to allow a user to flag one or more favourite/preferred channels.

A television system hereinafter described includes a broadcaster for transmitting digital data via terrestrial, cable or digital means, which is received by a broadcast data receiver (called a set top box). The digital data results in a large number of channels and programs available for selection by a user. Conventional listing means for the large number of channels and programs are inadequate and this has resulted in the development of Electronic Programme Guides (EPGs).

Although a large number of channels are available for a user to view, it is likely that a user will have a number of preferred channels which he/she will frequently watch. Conventionally, if a user wants to watch a particular preferred channel, the user has to scroll through each channel in turn until they find their favourite channel or they have to remember the channel number of the same and type this number into the remote control. The large number of channels available makes it difficult for a user to remember a number of preferred channels and it is time consuming for a user to have to select each channel in turn to find their preferred channel.

In order to overcome the above problem, some television systems provide a means for flagging favourite/preferred channels. For example, in a television system incorporating an EPG, channel and programme information are typically provided in a grid format for display on the display screen. In order for a user to flag favourite/preferred channels the user may be required to generate a new display grid of preferred channels by selecting each preferred channel in turn from a list of available channels using a single button on a remote control to cycle through the same. When the user reaches a channel they wish to select, they can select the same as a favourite channel. In future when the user wishes to tune to a previously flagged favourite channel, the user is required to return to the grid display and select a particular channel from the list of preferred channels. Sometimes this system is an interactive system which means the user may need to cycle through many channels to get to the one they want, and each time the user moves down to the next channel on the grid of available channels, the set top box tunes into that channel before moving onto further channels on the list. This is obviously time consuming and therefore undesirable.

It is an object of the present invention to provide a system to allow a user to flag preferred/favourite channels and/or programs which is quick and easy to use.

According to a first aspect of the present invention there is provided a television system including a display screen, a broadcast data receiver for receiving and processing digital data to provide audio, video and/or auxiliary data, at least part of said data being used to generate an electronic programme guide (EPG), said EPG being used to provide channel and/or television programme listings/schedules and/or information for display on said display screen, said system including remote control means for controlling one or more functions thereof, and characterised in that one or more channels and/or programmes which are displayed in the EPG are selected by the user using the remote control, and said selected channel(s)/programme(s) from the EPG are assigned to one or more pre-defined control buttons on the remote control, thereafter allowing access to said one or more channels/programmes by user selection of the appropriate pre-defined control button.

Preferably the one or more selected channels/programmes relate to pre-determined criteria, typically of interest to the user.

Preferably the pre-determined criteria relate to one or more subject matter categories and/or user-selected favourite channels and/or programmes.

Preferably the four favourite channels are assigned to the four coloured (fast text) buttons on the remote control. When the user wishes to change to a favourite channel, the user simply needs to press the corresponding coloured button.

Preferably a pop-up window can be displayed on the display screen to show the user which channels, programmes and/or pre-determined criteria are mapped to which control buttons.

The user can typically determine the subject matter categories to which buttons on the remote control are assigned. Alternatively the manufacturer and/or broadcaster can determine the subject matter categories.

Preferably when a number of programmes and/or channels are assigned to a button on the remote control, the user can scroll through the one or more channels/programmes using scroll and/or directional buttons on the remote control.

According to a second aspect of the present invention there is provided a broadcast data receiver (BDR) for receiving and processing digital data to provide audio, video and/or auxiliary data, at least part of said data being used to generate an electronic programme guide (EPG), said EPG being used to provide channel and/or television programme listings/schedules and/or information for display on a display screen connected to or forming an integral part of said BDR, a remote control means is provided for controlling one or more functions of said BDR, and characterised in that one or more channels and/or programmes relating to pre-determined criteria which are displayed in the EPG are selected by the user using the remote control, said selected channel(s)/programme(s) from the EPG are assigned to one or more pre-defined control buttons on the remote control, thereby allowing access to said one or more channels/programmes relating to said pre-determined criteria by user selection of the appropriate pre-defined control button.

According to a further aspect of the present invention there is provided An electronic programme guide (EPG), said EPG being generated from data received and processed via a broadcast data receiver, said EPG used to provide channel and/or television programme listings/schedules and/or information for display on a display screen connected to or forming an integral part of said BDR, a remote control means is provided for controlling one or more functions of said BDR, and characterised in that one or more channels and/or programmes relating to pre-determined criteria which are displayed in the EPG are selected by the user using the remote control, said selected channel(s)/programme(s) from the EPG are assigned to one or more pre-defined control buttons on the remote control, thereby allowing access to said one or more channels/programmes relating to said pre-determined criteria by user selection of the appropriate pre-defined control button.

According to a yet further aspect of the present invention there is provided a method of assigning one or more channels and/or programmes relating to pre-determined criteria from an EPG to one or more pre-defined control buttons on a remote control unit of a television system, said television system including a display screen, a broadcast data receiver for receiving and processing digital data to provide audio, video and/or auxiliary data, at least part of said data being used to generate an electronic programme guide (EPG), said EPG being used to provide channel and/or television programme listings/schedules and/or information for display on said display screen, said remote control unit for controlling one or more functions of said television system, and characterised in that in that said method includes the steps of selecting one or more channels and/or programmes relating to pre-determined criteria which are displayed on an EPG of said television system, depressing a user-defined control button on said remote control for a predetermined period of time for each selected channel and thereby assigning one or more channels and/or programmes relating to pre-determined criteria to said remote control button.

Once a preferred/favourite channel and/or programme has been assigned to a remote control button, in the future the user has to simply depress the control button to view the said channel.

Preferably a confirmation message will appear on the display screen and/or remote control to inform the user that the channel has been assigned to the depressed control button.

Preferably the EPG identifies flagged user preferred channels/programmes when the EPG is displayed on the display screen.

Typically once a channel/programme has been assigned to a control button, an existing channel/programme previously assigned to that button, will be replaced by the newly selected channel/programme.

Preferably a query message is displayed on the screen to inform the user that an existing channel/programme has previously been assigned to that button, thereby providing the user with the option of selecting a different button if required.

An advantage of the present invention is that it allows a user to quickly and easily select a favourite/preferred channel/programme using a single button. It also provides a quick and easy method of flagging favourite channels/programmes and/or programmes/channels relating to pre-determined subject matter.

An embodiment of the present invention will now be described with reference to the accompanying Figures wherein:

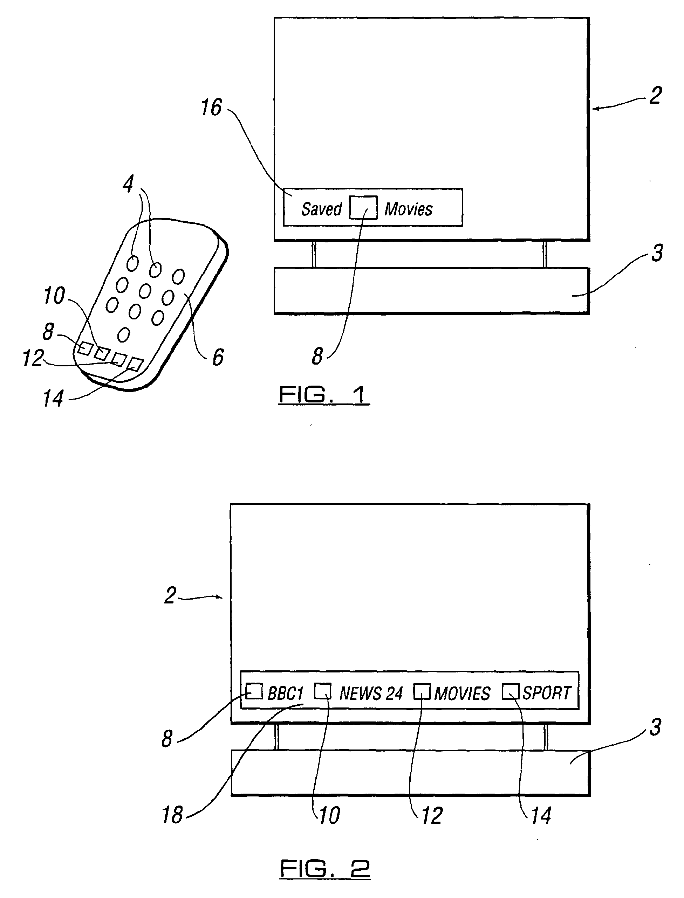

Figures 1 and 2 are examples of displays on a display screen according to the present invention.

Referring to Figure 1, there is illustrated a television system including a display screen 2 and a broadcast data receiver 3. The television system is provided with means to enable a user to quickly and easily flag favourite/preferred channels. A user selects a particular channel they wish to flag as a favourite channel and the television system tunes into the selected channel and displays the same on the screen 2.

A number of buttons 4 are provided on the remote control 6 to allow the user to move between different channels. The remote control 6 includes further control buttons 8, 10, 12 and 14 and are coloured red, blue, green, yellow respectively. The user selects a particular coloured button 8 and depresses the same for a pre-determined period of time, thereby assigning the selected channel to button 8. A confirmation message 16 appears on the display screen 2 to inform the user that the channel, in case the channel entitled "movies" has been successfully assigned to button 8.

Once a number of channels have been assigned to particular buttons, a pop-up window 18 can be displayed on screen 2 to inform the user which channels have been assigned to which buttons on the remote control, as illustrated in Figure 2.

The pop-up window 18 can be displayed by depressing a coloured button 8, 10, 12 or 14. Further depression of the appropriate one of the displayed buttons will then switch the television system to the required flagged channel.

For example, and as illustrated in Figures 1 & 2, if a user wishes to set the movie channel as one of their quick select favourites, the user selects the movie channel from the EPG display. The movie channel can also be selected by entering the numerical value of the channel or scrolling through the channels until the preferred channel is found.

The user then has to decide which of the coloured fast text buttons on the remote control the selected channel is to be assigned thereto. The user-selected button is then depressed for a predetermined period of time, for example, 2-3 seconds, thereby flagging the "movie" channel to that particular button on the remote control. In future, when the user wishes to view the "movie" channel, the user simply depresses the particular button 12 to which the movie channel is assigned.

Thus the present invention allows a user to select a favourite channel quickly and easily by depressing a single button. The system requires no complicated setting up, thereby enabling users of all ages to utilise the system.

## Claims

1. A television system including a display screen (2), a broadcast data receiver (3) for receiving and processing digital data to provide audio, video and/or auxiliary data, at least part of said data being used to generate an electronic programme guide (EPG), said EPG being used to provide channel and/or television programme listings/schedules and/or information for display on said display screen, said system including remote control means (6) for controlling one or more functions thereof, and **characterised in that** one or more channels and/or programmes which are displayed in the EPG are selected by the user using the remote control (6), and said selected channel(s)/programme(s) from the EPG are assigned to one or more pre-defined control buttons on the remote control, thereafter allowing access to said one or more channels/programmes by user selection of the appropriate pre-defined control button.

2. A television system according to claim 1 **characterised in that** the one or more selected channels/programmes relate to pre-determined criteria.

3. A television system according to claim 1 **characterised in that** programmes and/or channels are assigned to the four coloured (fast text) buttons (8, 10, 12, 14) on the remote control (6).

4. A television system according to claim 1 **characterised in that** the user assigns channels/programmes to said one or more pre-defined control buttons.

5. A television system according to claim 1 **characterised in that** a broadcaster or manufacturer of the television system assigns channels/programmes to said one or more pre-defined control buttons.

6. A television system according to claim 2 **characterised in that** the pre-determined criteria includes one or more subject matter categories.

7. A television system according to claim 2 **characterised in that** the pre-determined criteria includes one or more user-selected favourite channels.

8. A television system according to claim 1 **characterised in that** the EPG display is provided with a pop-up window (18) displayable on the display screen (2) to inform the user which subject matter categories and /or favourite channels/programmes are assigned or mapped to which control buttons on the remote control unit (6).

9. A television system according to claim 1 **characterised in that** if two or more channels and/or programmes are assigned to a control button relating to particular pre-determined criteria, the user can scroll through the one or more channels/programmes assigned to that button using scroll and/or directional buttons on the remote control (6).

10. A broadcast data receiver (BDR) (3) for receiving and processing digital data to provide audio, video and/or auxiliary data, at least part of said data being used to generate an electronic programme guide (EPG), said EPG being used to provide channel and/or television programme listings/schedules and/or information for display on a display screen (2) connected to or forming an integral part of said BDR (3), a remote control means (6) is provided for controlling one or more functions of said BDR, and **characterised in that** one or more channels and/or programmes relating to pre-determined criteria which are displayed in the EPG are selected by the user using the remote control (6), said selected channel(s)/programme(s) from the EPG are assigned to one or more pre-defined control buttons on the remote control (6), thereafter allowing access to said one or more channels/programmes relating to said pre-determined criteria by user selection of the appropriate pre-defined control button.

11. An electronic programme guide (EPG), said EPG being generated from data received and processed via a broadcast data receiver (3), said EPG used to provide channel and/or television programme listings/schedules and/or information for display on a display screen (2) connected to or forming an integral part of said BDR (3), a remote control means (6) is provided for controlling one or more functions of said BDR (3), and **characterised in that** one or more channels and/or programmes relating to pre-determined criteria which are displayed in the EPG are selected by the user using the remote control (6), said selected channel(s)/programme(s) from the EPG are assigned to one or more pre-defined control buttons on the remote control (6), thereafter allowing access to said one or more channels/programmes relating to said pre-determined criteria by user selection of the appropriate pre-defined control button.

12. A method of assigning one or more channels and/or programmes relating to pre-determined criteria from an EPG to one or more pre-defined control buttons on a remote control unit (6) of a television system, said television system including a display screen (2), a broadcast data receiver (3) for receiving and processing digital data to provide audio, video and/or auxiliary data, at least part of said data being used to generate an electronic programme guide (EPG), said EPG being used to provide channel and/or television programme listings/schedules and/or information for display on said display screen (2), said remote control unit (6) for controlling one or more functions of said television system, and **characterised in that in that** said method includes the steps of selecting one or more channels and/or programmes relating to pre-determined criteria which are displayed on an EPG of said television system, depressing a user-defined control button on said remote control (6) for a predetermined period of time for each selected channel and thereby assigning one or more channels and/or programmes relating to pre-determined criteria to said remote control button.

13. A method according to claim 12 **characterised in that** once the selected channels and/or programmes have been assigned to a remote control button, the user is required to depress the control button to view said channels and/or programmes relating to said pre-determined criteria.

14. A method according to claim 12 **characterised in that**, when the channel and/or programme is selected and assigned to a button of pre-determined criteria, a confirmation message appears on the display screen (2) and/or remote control (6) to inform the user that the channel and/or programme has been assigned to the depressed control button.

15. A method according to claim 12 **characterised in that** the EPG identifies user selected channels and/or programmes which have been assigned to one or more pre-defined buttons on the remote control (6) when the EPG is displayed on the display screen (2).

16. A method according to claim 12 **characterised in that** once one or more channels and/or programmes relating to a pre-determined criteria have been assigned to a button on the remote control (6), any existing channels/programmes previously assigned to that button are replaced by the newly selected channels/programmes.

17. A method according to claim 16 **characterised in that** a message is displayed on the display screen (2) to inform the user that an existing channel and/or programme has previously been assigned to the button, thereby providing the user with the option of selecting a different button if required.
